Europäisches Patentamt

European Patent Office

Office européen des brevets

(19)

(11) Veröffentlichungsnummer: **0 355 743**
**A2**

(12) # EUROPÄISCHE PATENTANMELDUNG

(21) Anmeldenummer: **89115289.4**

(22) Anmeldetag: **18.08.89**

(51) Int. Cl.⁴: **B60N 3/06**

(30) Priorität: **23.08.88 DE 8810664 U**

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **Karl Kässbohrer Fahrzeugwerke GmbH**
**Kässbohrerstrasse 13 Postfach 2660**
**D-7900 Ulm (Donau)(DE)**

(72) Erfinder: **Kauer, Kurt**
**Biberacher Strasse 12**
**D-7900 Ulm(DE)**

(74) Vertreter: **Patentanwälte Grünecker,**
**Kinkeldey, Stockmair & Partner**
**Maximilianstrasse 58**
**D-8000 München 22(DE)**

(54) **Fussstütze.**

(57) Die Fußstütze weist eine ortsfeste Halterung, sowie ein verschwenkbar daran gelagerten Träger auf, an dem die eigentliche Fußaufnahme angebracht ist und der mit Hilfe einer Verstelleinrichtung in seiner Position einstellbar ist. Letztere ist mit dem Träger über ein Zahnsegment verbunden, dem eine federbelastete Klinke zugeordnet ist. Zum Lösen der Klinke ist eine Löseeinrichtung vorhanden.

Die Schwenkachse der Klinke befindet sich zwischen einem ortsfesten Lager der Feder und einem an der Klinke angeordneten Haken dergestalt, daß in einer Totpunktstellung sich die Schwenkachse auf der Verbindungslinie zwischen Lager und Haken befindet. Das Zahnsegment weist in Abstand von den Rastzähnen eine Steuernocke auf in dessen Bewegungsbahn an der Klinke ein Vorsprung angebracht ist. Es verfügt weiterhin im Endbereich der Rastverzahnung über einen Mitnehmer.

FIG.1

EP 0 355 743 A2

## Mechanisch verstellbare Fußstütze, insbesondere für den Einbau in Omnibusse

Die Erfindung betrifft eine Fußstütze, insbesondere zum Anbringen an Sitzgestellen von Omnibussen, bestehend aus einer ortsfesten Halteeinrichtung sowie einer an der Halteeinrichtung um eine etwa horizontale Lagerachse verschwenkbar gelagerten Trageinrichtung, an welcher eine Fußaufnahme angebracht ist, sowie aus einer Verstelleinrichtung, die ein mit der Trageinrichtung verbundenes Zahnsegment, ferner eine damit zusammenwirkende, um eine etwa parallel zur Lagerachse angeordnete Schwenkachse schwenkbare Klinke, die durch eine Feder in einer hinters Zahnsegment eingreifenden Arretierstellung gehalten ist, sowie aus einer Löseeinrichtung, wobei die Verstelleinrichtung mit der Trageinrichtung und der Löseeinrichtung so zusammenwirkt, daß die Klinke beim Schwenken der Fußaufnahme von der höchsten Stellung in die unterste Stellung durch die Löseeinrichtung außer Eingriff mit dem Zahnsegment gehalten ist, beim anschließenden Schwenken, nachdem die Klinke dagegen nacheinander in die Zahnlücke des Zahnsegments eingreift und so die Fußaufnahme an einem Schwenken nach unten stufenweise hindert, bis die Fußaufnahme wieder in die höchste Stellung geschwenkt ist, wobei die Feder für die Klinke mit einem Ende an einem ortsfesten Lager der Halteeinrichtung und mit dem anderen Ende an einem exzentrisch zur Schwenkachse angebrachten Haken an der Klinke befestigt ist.

Eine bekannte Fußstütze dieser Art besteht aus einer Halteeinrichtung und einer Trageinrichtung, die mit der Fußaufnahme einen U-förmigen Rahmen bildet, der an den freien Enden je eine Verstelleinrichtung aufweist und dort drehbar gelagert ist.

Jede Verstelleinrichtung weist zwei mit dem Rahmen verschweißte Metallscheiben, die mit einem Zahnsegment versehen sind, und eine in das Zahnsegment im Arretiersinn federbelastete Klinke auf, die mit der Halteeinrichtung verbunden ist.

Die Löseeinrichtung mit der die Klinke aus der Arretierstellung in eine Freistellung versetzt wird, besteht aus einer weiteren Metallscheibe, die zwischen den beiden mit Zahnsegmenten versehenen Metallscheiben angeordnet ist und sich durch einen größeren Radius auszeichnet. Bei Erreichen der höchsten Stellung der Fußaufnahme wird die Klinke mittels einer in der Metallscheibe angeordneten schiefen Ebene gegen die Federkraft auf den großen Radius gehoben. Beim Zurückschwenken der Fußaufnahme fährt die Klinke über das Zahnsegment hinweg bis zur Ausgangsstellung, in der die Klinke wieder in das Zahnsegment einrastet und so die erneute Einstellung der Fußstütze erfolgen kann.

Die Konstruktion dieser bekannten Fußstütze bedingt einen verhältnismäßig großen baulichen Aufwand, welcher auch zu einer gewissen Störanfälligkeit führen kann.

Der Erfindung liegt die Aufgabe zugrunde, eine Vorrichtung dieser Art so auszubilden, daß bei einem reduzierten baulichen Aufwand Störungen in der Praxis ausgeschlossen sind.

Die Erfindung löst bei der eingangs beschriebenen Fußstütze die Aufgabe, indem die Schwenkachse der Klinke zwischen dem ortsfesten Lager der Feder und dem Haken an der Klinke angeordnet ist, dergestalt, daß in der Totpunktstellung sich die Schwenkachse auf der Verbindungslinie zwischen Lager und Haken befindet, daß ferner am Zahnsegment in einem Abstand von den Rastzähnen ein Steuernocken und in dessen Bewegungsbahn an der Klinke ein Vorsprung angebracht ist, wobei der Steuernocken beim Auftreffen auf den Vorsprung am Ende der Hochschwenkbewegung der Trageinrichtung die Klinke in eine Endstellung schwenkt, in welcher sie außer Eingriff mit den Rastzähnen des Zahnsegmentes und die Feder über die Totpunktlage in die Offenhaltungsstelle überführt ist, daß weiterhin am Zahnsegment im Endbereich der Rastverzahnung ein Mitnehmer angebracht ist, in dessen Bewegungsbahn sich das Ende eines die Schwenkung der Klinke mitmachenden Steuerarmes befindet, dergestalt, daß der Mitnehmer bei Betätigung des Steuerarmes während des Abwärtsschwenkens der Trageinrichtung die Klinke in eine Endstellung schwenkt, in welcher sie mit der Rastverzahnung im Eingriff und die Feder über die Totpunktlage hinweg in die Arretierstellung überführt ist.

Durch diese Maßnahmen wird trotz verringerter Bauteile die Funktionssicherheit der Fußstütze gewährleistet.

Die Fußstütze kann gemäß der Erfindung sowohl zwei Tragarme als auch einen einzigen Tragarm und dementsprechend auch nur eine Verstelleinrichtung, eine Arretiereinrichtung und eine Löseeinrichtung aufweisen.

Besonders vorteilhaft ist es, nur einen einzigen, aus Kunststoff bestehenden Tragarm vorzusehen, an dessen freien Ende zwei Fußrasten angebracht sind und der mit dem Zahnsegment einstückig gefertigt ist.

Bei dieser Ausführung ist die Zahl der Einzelteile besonders stark reduziert.

Weitere Merkmale der Erfindung ergeben sich aus den Unteransprüchen sowie aus den nachfolgenden Beschreibungen in Verbindung mit der Zeichnung, in welcher ein Ausführungsbeispiel der Fußstütze schematisch dargestellt ist.

Dabei zeigen

Figur 1 eine Seitenansicht der gesamten Fußstütze mit ihrer Befestigung,

die Figuren 2 bis 5 die Fußstütze in verschiedenen Schwenkstellungen, wobei einige Teile der besseren Übersicht wegen weggelassen sind.

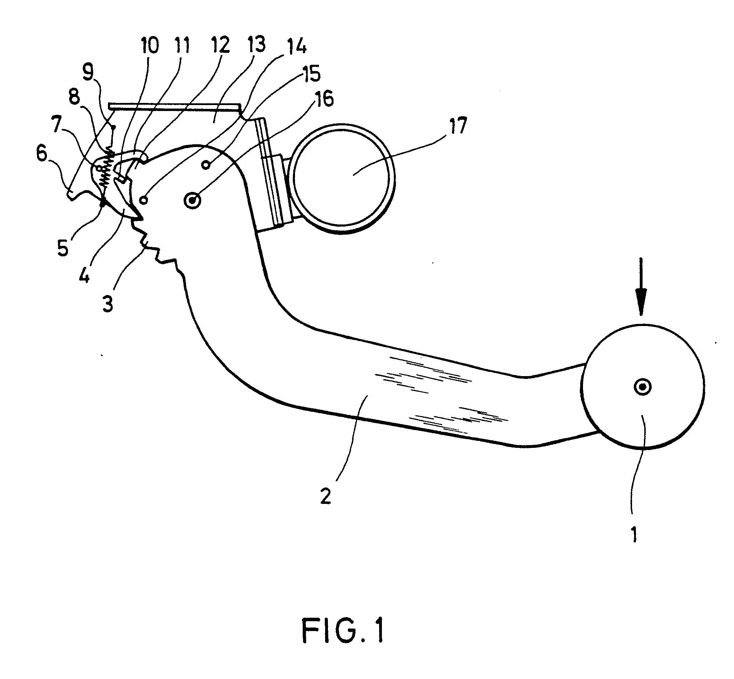

In Figur 1 ist ein zum nicht weiter gezeigten Sitzgestell gehörendes Rohr 17 dargestellt, an dem eine ortsfeste Halteeinrichtung 13 der Fußstütze befestigt ist. An der Halteeinrichtung 13 befindet sich eine Lagerachse 16, an der eine Trageinrichtung 2 in Form eines Tragarmes gelagert ist, an dessen freiem Ende sich eine Fußaufnahme 1 befindet.

Am anderen Ende des Tragarmes 2 befinden sich eine federbelastete Rastkugel 15, ein Steuernocken 12, ein Mitnehmer 19 in Form eines Mitnehmerstiftes und ein Zahnsegment 3, das mit einer Klinke 4 zusammenwirkt. Die Klinke 4 weist einen Haken 5 auf, an welchem das eine Ende einer Zugfeder 8 befestigt ist, deren anderes Ende an einem ortsfesten Lager 9 der Halteeinrichtung 13 befestigt ist.

Weiterhin befindet sich an der Klinke 4 ein dem Steuernocken 12 zugeordneter Vorsprung 10 und ein dem Mitnehmer 14 zugeordneter Steuerarm 11.

Die Klinke 4 ist um eine an der Halteeinrichtung angebrachte Achse 7 schwenkbar.

In der Schwenkbahn des H kens 5 an der Klinke 4 ist an der Halteeinrichtung 13 ein Anschlag 6 angebracht, der die Schwenkbewegung des Hakens 5 begrenzt.

Der Funktionsablauf bei Betätigung der Fußstütze läßt sich wie folgt beschreiben.

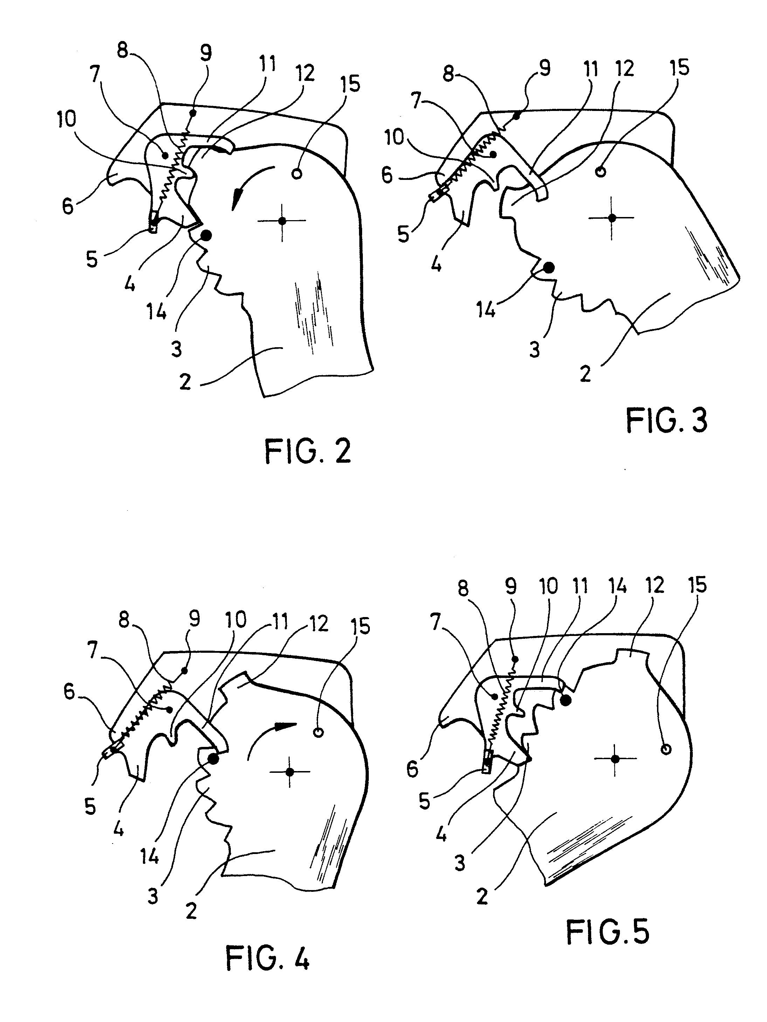

Die Fußaufnahme 1 und damit auch der Tragarm 2 befinden sich in der höchsten Rastposition wie in Figur 1 zu sehen ist. Dabei befindet sich die Zugfeder 8 über den Totpunkt geschwenkt rechts neben der Lagerachse 7. Wird der Tragarm 2 über die höchste Rastposition hinweg nach oben gehoben wie in Figur 2 anfangs der Bewegung gezeigt, so kommt der Steuernocken 12 zunächst mit dem Vorsprung 10 in Berührung und schwenkt dann die Klinke 4 aus ihrer Raststellung über den Totpunkt hinaus, der dadurch bestimmt ist, daß das ortsfeste Lager 9 der Feder 8, die Schwenkachse 7 der Klinke 4 und der Haken 5, an dem sich die zweite Befestigung der Feder befindet, auf einer Geraden liegen, bis der Haken 5 an dem Anschlag 6 anliegt und die Klinke 4 in dieser Stellung durch die Feder 8 gehalten wird, wie in Figur 3 gezeigt.

Die Klinke befindet sich jetzt in einer Offenhaltestellung, indem sie mit dem Zahnsegment 3 nicht in Eingriff ist.

Der Tragarm 2 kann jetzt von der höchsten Stellung frei nach unten geschwenkt werden, wobei der Mitnehmer 14 mit dem Steuerarm 11 in Berührung kommt, wie Figur 4 zeigt, und in der weiteren Bewegung die Klinke 4 aus der Offenhaltungsstellung über den Totpunkt der Feder 8 hinaus zurück in die Arretierstellung schwenkt, in welcher sie sich im Eingriff mit der untersten Rastzahnlücke befindet, wie in Figur 5 dargestellt.

Von hier aus kann die Klinke 4 nun durch Hochschwenken des Tragarmes 2 in die verschiedenen Rastpositionen gleiten und so die Fußstütze in eine vom Benutzer gewünschte Position gebracht werden.

Zusätzlich wird die Fußaufnahme 1 bei Erreichen ihrer höchsten Position durch Einrasten der federbelasteten Rastkugel 15 festgehalten, damit sie sich auch dann nicht frei bewegen kann, wenn die Klinke 4 nicht mehr in Eingriff mit dem Zahnsegment 3 ist.

Bei dieser oben beschriebenen Ausführung besteht die Trageinrichtung aus einem einzigen Tragarm, an dessen freiem Ende sich beidseitig zwei drehbar gelagerte Fußaufnahmen befinden. Die Fußaufnahmen, die zylinderförmig oder quaderförmig gestaltet sein können, befinden sich dann auf einer quer zum Tragarm angebrachten Achse.

Der Tragarm kann aus einem Kunststoffprofil gefertigt sein, welches an der Unterseite mit Verstärkungsrippen versehen und im Querschnitt U-förmig sein kann, wobei die U-Schenkel nach unten weisen.

Es ist auch möglich, die Fußstütze mit zwei Tragarmen auszuführen, wobei dann auch zwei Halteeinrichtungen und zwei Verstelleinrichtungen vorhanden sind.

Bei dieser Ausführung werden die beiden Tragarme an ihren freien Enden mit einer Querstrebe verbunden. Diese wird dabei vorteilhaft als Fußaufnahme ausgebildet.

Die ortsfeste Halterung kann in beiden Fällen mit dem Rahmen des Sitzgestelles derart verbunden sein, daß die Verstelleinrichtung in Fahrtrichtung gesehen vor dem Befestigungsrohr sitzt und so für den Benutzer nicht sichtbar und vor Beschädigungen geschützt ist.

## Ansprüche

1. Fußstütze, insbesondere zum Anbringen an Sitzgestellen von Omnibussen, bestehend aus einer ortsfesten Halteeinrichtung, sowie einer an der Halteeinrichtung um eine etwa horizontale Lagerachse verschwenkbar gelagerten Trageinrichtung, an welcher eine Fußaufnahme angebracht ist, sowie aus einer Verstelleinrichtung, die ein mit der Trageinrichtung verbundenes Zahnsegment, ferner eine damit zusammenwirkende, um eine etwa parallel zur Lagerachse angeordnete Schwenkachse schwenkbare Klinke, die durch eine Feder in einer in das Zahnsegment eingreifenden Arretierstellung gehalten ist, sowie eine Löseeinrichtung aufweist, wobei die Verstelleinrichtung mit der Trageinrichtung und der Löseeinrichtung so zusammenwirkt, daß die Klinke beim Schwenken der Fußaufnahme von der höchsten Stellung in die unterste Stellung durch die Löseeinrichtung außer Eingriff mit dem Zahnsegment gehalten ist, beim anschließenden Schwenken nach oben die Klinke dagegen nacheinander in die Zahnlücken des Zahnsegmentes eingreift und so die Fußaufnahme an einem Schwenken nach unten stufenweise hindert, bis die Fußaufnahme wieder in die höchste Stellung geschwenkt ist, wobei die Feder für die Klinke mit einem Ende an einem ortsfesten Lager der Halteeinrichtung und mit dem anderen Ende an einem exzentrisch zur Schwenkachse angebrachten Haken an der Klinke befestigt ist,

**dadurch gekennzeichnet,**

daß die Schwenkachse (7) der Klinke (4) zwischen dem ortsfesten Lager (9) der Feder (8) und dem Haken (5) an der Klinke (4) angeordnet ist, dergestalt, daß in der Totpunktstellung sich die Schwenkachse (7) auf der Verbindungslinie zwischen Lager (9) und Haken (5) befindet, daß ferner am Zahnsegment (3) in einem Abstand von den Rastzähnen ein Steuernocken (12) und in dessen Bewegungsbahn an der Klinke (4) ein Vorsprung (10) angebracht ist, wobei der Steuernocken (12) beim Auftreffen auf den Vorsprung (10) am Ende der Hochschwenkbewegung der Trageinrichtung die Klinke (4) in eine Endstellung schwenkt, in welcher sie außer Eingriff mit den Rastzähnen des Zahnsegmentes (3) und die Feder (8) über die Totpunktlage in die Offenhaltungsstelle überführt ist, daß weiterhin am Zahnsegment (3) im Endbereich der Rastverzahnung ein Mitnehmer (14) angebracht ist, in dessen Bewegungsbahn sich das Ende eines die Schwenkung der Klinke (4) mitmachenden Steuerarmes (11) befindet, dergestalt, daß der Mitnehmer (14) bei Betätigung des Steuerarmes (11) während des Abwärtsschwenkens der Trageinrichtung die Klinke (4) in eine Endstellung schwenkt, in welcher sie mit der Rastverzahnung im Eingriff und die Feder (8) über die Totpunktlage hinweg in die Arretierstellung überführt ist.

2. Fußstütze nach Anspruch 1,
**dadurch gekennzeichnet,**
daß am Zahnsegment (3) eine federbelastete Rastkugel (15) angebracht ist, die bei hochgeschwenktem Tragarm (2) in eine Rast an der Halteeinrichtung einrastet.

3. Fußstütze nach Anspruch 1 oder 2,
**dadurch gekennzeichnet,**
daß an der Halteeinrichtung ein Anschlag (6) für den an der Klinke (4) befindlichen Haken (5) angebracht ist.

4. Fußstütze nach mindestens einem der Ansprüche 1 bis 3,
**dadurch gekennzeichnet,**
daß die Trageinrichtung aus einem einzigen Tragarm (2) besteht, an dessen freiem Ende zwei Fußrasten angebracht sind.

5. Fußstütze nach mindestens einem der Ansprüche 1 bis 4,
**dadurch gekennzeichnet,**
daß der Tragarm aus Kunststoff gefertigt ist.

6. Fußstütze nach Anspruch 5,
**dadurch gekennzeichnet,**
daß der Tragarm (2) und das Zahnsegment (3) einstückig aus Kunststoff gefertigt sind.

7. Fußstütze nach mindestens einem der Ansprüche 1 bis 6,
**dadurch gekennzeichnet,**
daß die Halteeinrichtung so an einem Rohr (17) des Sitzgestelles befestigt ist, daß sich das Rohr (17) zwischen dem hochgeschwenkten Tragarm (2) und der Halteeinrichtung befindet.

FIG.1

EP 0 355 743 A2

FIG. 2

FIG. 3

FIG. 4

FIG.5